# EUROPEAN PATENT SPECIFICATION

(11) **EP 3 024 084 B1**
(45) Date of publication and mention of the grant of the patent: **03.01.2018**
(21) Application number: 14842727.1
(22) Date of filing: 15.07.2014
(51) Int. Cl.: H01M 2/02, H01M 10/04, H01M 10/052

(54) **METHOD FOR MANUFACTURING RECTANGULAR BATTERY CELL USING METAL PLATES**
VERFAHREN ZUR HERSTELLUNG EINER RECHTECKIGEN BATTERIEZELLE MIT METALLPLATTEN
PROCÉDÉ DE FABRICATION D'UN ÉLÉMENT DE BATTERIE RECTANGULAIRE EN UTILISANT DES PLAQUES MÉTALLIQUES

(30) Priority: 05.09.2013 KR 20130106641
(43) Date of publication of application: 25.05.2016
(73) Proprietor: LG Chem, Ltd., Seoul 07336 (KR)
(72) Inventor: KIM, Tae Wook, Daejeon 305-380 (KR); YOON, Seog Jin, Daejeon 305-380 (KR); YUN, Hyung Ku, Daejeon 305-380 (KR)
(74) Representative: Cabinet Plasseraud
(86) International application number: PCT/KR2014/006379
(87) International publication number: WO 2015/034173

(56) References cited:
- WO-A1-2012/073885
- JP-A- 2001 236 929
- KR-A- 20130 069 382
- KR-A- 20130 080 258
- KR-B1- 101 002 511
- KR-B1- 101 071 462
- KR-B1- 101 082 870
- US-A1- 2009 029 260
- US-A1- 2012 094 160

## Description

### [TECHNICAL FIELD]

The present invention relates to a method of manufacturing a prismatic battery cell. More particularly, the present invention relates to a method of manufacturing a battery cell including an electrode assembly, which includes a separator interposed between a cathode and an anode and is sealed inside a prismatic battery case, including bending and then welding a metal plate having a predetermined thickness to manufacture a prismatic body in which the upper portion and bottom portion are open, manufacturing upper and bottom portion sealing members corresponding to shape of each of the upper portion and bottom portion of the prismatic body, contacting and then welding the bottom portion of the prismatic body and the bottom portion sealing member, inserting the electrode assembly into the battery case, the bottom portion of which is sealed, and contacting and then welding the upper portion of the battery case and the upper portion sealing member.

### [BACKGROUND ART]

Recently, people are more concerned with environmental problems and depletion of natural sources and, as such, interest in solar cells as an alternative energy source which does not cause environmental pollution is growing. Solar cells are classified into silicon solar cells, thin film-type compound solar cells, layered-type solar cells and the like. Among these solar cells, silicon semiconductor solar cells are the most widely studied.

An electrode assembly may be configured to have a jelly-roll (wound) type structure in which a long sheet type cathode and a long sheet type anode are wound while a separator is disposed between the cathode and the anode, a stacked type structure in which pluralities of cathodes and anodes having a predetermined size are sequentially stacked while separators are disposed respectively between the cathodes and the anodes, or a stacked/folded type structure in which pluralities of cathodes and anodes having a predetermined size are sequentially stacked while separators are disposed respectively between the cathodes and the anodes to constitute a bi-cell or a full-cell and then a plurality of bi-cells or full-cells is folded, according to the structure of an electrode assembly having a cathode/separator/anode structure.

In addition, secondary batteries are classified into a cylindrical or prismatic battery including an electrode assembly in a cylindrical or rectangular metal can and a pouch type battery including an electrode assembly in a pouch type case made of an aluminum laminate sheet according to shapes of battery cases.

Especially, prismatic batteries having relatively narrow width, according to miniaturization and weight reduction trends of mobile electric devices, have been developed. Such prismatic batteries may be applied to different applications than cylindrical type batteries.

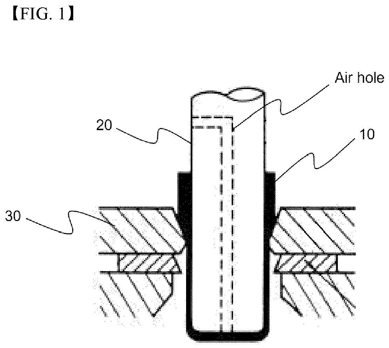

Generally, prismatic batteries are manufactured by welding an upper portion cap assembly and injecting an electrolyte thereinto and then sealing an injection port after inserting some battery members into a prismatic hollow case, a bottom portion of which is sealed. Here, the prismatic hollow case having the sealed bottom portion is generally manufactured by processing an aluminum alloy plate according to a deep drawing method as exemplified in FIG.1. Deep drawing is a representative forming process of manufacturing a hollow container without a joint using a flat plate in which a plate to be processed 10 disposed on a surface of a die 30 is moved between a punch 20 and die 30 while being compressed in the circumferential direction, resulting in a side wall.

Since a plate may be manufactured into a final hollow case through continuous deep drawing processes, the deep drawing method has high efficiency. However, the deep drawing method has some drawbacks as follows.

First, since a process of the deep drawing method consists of, approximately, 10 steps or more, and is sophisticated, manufacturing costs related thereto are extremely high. Especially, to manufacture a mold or the like, a long period of 2 to 3 months is generally required and thereby required time to develop batteries in accord with changing tastes of consumers greatly is greatly extended.

Second, materials able to be processed according to the deep drawing method are extremely limited. During the deep drawing process, materials are stretched and, as such, only materials capable of undergoing stretching can be user. However, it is generally difficult to stretch materials having high intensity and, as such, it may be difficult to obtain battery cases having desired characteristics.

Finally, when prismatic battery cases are processed according to a deep drawing method and a thickness ratio of a long side and short side of a bottom portion exceeds a predetermined ratio, edge cracks may occur and, as such, an error rate of products is high and case dimensions are limited.

Therefore, there is an urgent need to develop a technology that can fundamentally address these problems.

Prismatic battery cases manufactured without the use of deep drawing have been disclosed by JP2001236929 and WO2012073885.

### [DISCLOSURE]

### [TECHNICAL PROBLEM]

The present invention aims to address the aforementioned problems of the related art and to achieve technical goals that have long been sought.

Namely, the present invention aims to provide a method of manufacturing a prismatic battery cell, production cost of which is reduced due to a simplified manufacturing process and improved production process efficiency, by constituting a battery case such that a prismatic body having an open upper portion and bottom portion by bending and then welding a metal plate having a predetermined thickness, and an upper and bottom portion sealing member corresponding to shape of each of the upper portion and bottom portion of the prismatic body are combined.

The present invention also aims to provide a method of easily manufacturing a prismatic battery cell while improving a production ratio and obtaining high yield.

### [TECHNICAL SOLUTION]

In accordance with one aspect of the present invention, provided is a method of manufacturing a battery cell including an electrode assembly which includes a separator interposed between a cathode and an anode, and is sealed inside a prismatic battery case, the method including:
(a) bending and then welding a metal plate having a predetermined thickness to manufacture a prismatic body in which an upper portion and bottom portion are open;
(b) manufacturing upper and bottom portion sealing members corresponding to shape of each of an upper portion and a bottom portion of a prismatic body;
(c) contacting and then welding the bottom portion of the prismatic body and the bottom portion sealing member;
(d) inserting the electrode assembly into the battery case, the bottom portion of which is sealed, manufactured according to step (c); and
(e) contacting and then welding the upper portion of the battery case and the upper portion sealing member manufactured according to step (d).

Therefore, a manufacturing cost of the method of manufacturing the battery cell according to the present invention may be reduced by combining together segmented case members, when compared to a deep drawing method. In addition, the total manufacturing period of the battery cell may be greatly shortened. Further, the battery cell may be manufactured in a variety of designs and, at the same time, the error rates of products may be reduced.

In one embodiment, overlapped both end portions of the metal plate bent according to step (a) may be welded in a state that sections of the end portions contact. According to the invention, the bent metal plate is welded in a state that the overlapped both end portions are overlapped to a predetermined width..

In particular, a width by which both end portions overlap may be in a range of 0.1 to 10 mm. The overlapped portion may be welded after rolling such that the thickness of the overlapped portion is 110% to 150% based on the thickness of the metal plate.

Such a method of welding a case member is not limited specifically so long as the case member may be combined with high intensity and sealed. For example, the welding method may be a laser welding method, arc welding method, electric resistance welding method, gas welding method, ultrasonic welding method, or the like. Among these welding methods, the laser welding method may be more preferable.

Materials of a metal plate and sealing member constituting the prismatic battery cell according to the present invention are not specifically limited so long as the materials have properties suitable for a battery case, may be manufactured to a plate type and may be used in a manufacturing process of a cell case. The materials may be, concretely, aluminum or an aluminum alloy.

In addition, the battery case has a predetermined thickness. For example, the battery case may have a thickness of 0.1 to 1 mm. When the battery case is too thick, the total thickness or volume of a final battery cell product may be enlarged. On the contrary, when the battery case is too thin, the battery case may not have desired mechanical intensity and the prismatic battery cell may not be protected against external shock. Therefore, the battery case having thickness outside the above range is not preferable.

The upper portion sealing member and bottom portion sealing member may be manufactured, for example, by a forging, blanking or cutting process. The upper portion sealing member may include an electrolyte injection port for electrolyte injection.

Meanwhile, lithium secondary batteries go through a formation process during manufacture of the lithium secondary battery. The formation process is a process of charging and discharging the lithium secondary batteries after assembly of the lithium secondary batteries to activate the lithium secondary batteries. During charging of the lithium secondary batteries, lithium ions discharged from a cathode of the lithium secondary battery migrate to a carbon electrode, which is used as an anode of the lithium secondary batteries. At this time, a solid electrolyte interface (SEI) film is formed at the surface of the anode.

In the formation process, the lithium secondary batteries are repeatedly charged and discharged with constant current or constant voltage in a predetermined range. To effectively perform the activation process of the battery cell, at least a portion of outer surfaces of the battery case is coated with an insulative material.

The insulative material is not specifically restricted so long as the insulative material is coated on the outer surface of the prismatic can to insulate the outer surface of the prismatic can from the outside. For example, the coating of the prismatic can with the insulative material may be achieved by anodizing an aluminum oxide on the outer surface of the prismatic can, by spraying the insulative material to the outer surface of the prismatic can, or by spreading an insulative thin film label to the outer surface of the prismatic can.

The electrode assembly, which is not particularly limited, is preferably a folding type electrode assembly, stack type electrode assembly and stack/folding type electrode assembly. In one embodiment, taps extended from an electrode assembly are combined with one electrode lead. Due to the electrode lead, a planar type electrode terminal is formed.

Korean Patent Application Pub. Nos. 2001-0082058, 2001-0082059 and 2001-0082060 particularly disclose with respect to the stack/folding type electrode assembly. The applications are combined as references of the present invention.

The battery pack according to the present invention may be applied to a lithium ion secondary battery in which an electrode assembly is impregnated with a lithium-containing electrolyte, a lithium ion polymer battery in which an electrode assembly is impregnated with a gel-type lithium-containing electrolyte, and the like

In general, a lithium secondary battery includes a cathode, an anode, a separator, and a lithium salt-containing non-aqueous electrolyte.

The cathode may be manufactured by, for example, coating a mixture of a cathode active material, a conductive agent, and a binder on a cathode current collector and drying the coated cathode current collector. The mixture may further include a filler as desired.

Examples of the cathode active material include, without being limited to, layered compounds such as lithium cobalt oxide (LiCoO₂) and lithium nickel oxide (LiNiO₂) or compounds substituted with one or more transition metals; lithium manganese oxides represented by Li₁₊ₓMn₂₋ₓO₄ where 0≤x≤0.33, such as LiMnO₃, LiMn₂O₃, and LiMnO₂; lithium copper oxide (Li₂CuO₂); vanadium oxides such as LiV₃O₈, LiV₃O₄, V₂O₅, and Cu₂V₂O₇; Ni-site type lithium nickel oxides having the formula LiNi₁₋ₓMₓO₂ where M=Co, Mn, Al, Cu, Fe, Mg, B, or Ga, and 0.01≤x≤0.3; lithium manganese composite oxides having the formula LiMn₂₋ₓMₓO₂ where M=Co, Ni, Fe, Cr, Zn, or Ta, and 0.01≤x≤0.1 or the formula Li₂Mn₃MO₈ where M=Fe, Co, Ni, Cu, or Zn; LiMn₂O₄ where some of the Li atoms are substituted with alkaline earth metal ions; disulfide compounds; and Fe₂(MoO₄)₃.

The conductive material is typically added in an amount of 1 to 30 wt% based on a total weight of a mixture including a cathode active material. There is no particular limit as to the conductive material, so long as it does not cause chemical changes in the fabricated battery and has conductivity. Examples of conductive materials include, but are not limited to, graphite such as natural or artificial graphite; carbon black such as carbon black, acetylene black, Ketjen black, channel black, furnace black, lamp black, and thermal black; conductive fibers such as carbon fibers and metallic fibers; metallic powders such as carbon fluoride powder, aluminum powder, and nickel powder; conductive whiskers such as zinc oxide and potassium titanate; conductive metal oxides such as titanium oxide; and polyphenylene derivatives.

The binder is a component assisting in binding between an active material and a conductive material and in binding of the active material to a current collector. The binder may be typically added in an amount of 1 to 50 wt% based on a total weight of a mixture including a cathode active material. Examples of the binder include, but are not limited to, polyvinylidene fluoride, polyvinyl alcohols, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene-butadiene rubber, fluorine rubber, and various copolymers.

The filler is optionally used as a component to inhibit cathode expansion. The filler is not particularly limited so long as it is a fibrous material that does not cause chemical changes in the fabricated secondary battery. Examples of the filler include olefin-based polymers such as polyethylene and polypropylene; and fibrous materials such as glass fiber and carbon fiber.

The anode is manufactured by coating and drying an anode active material on an anode current collector. In this case, as desired, the ingredients described above may be further selectively included.

Examples of the anode active material include, for example, carbon such as hard carbon and graphite-based carbon; metal composite oxides such as LiₓFe₂O₃ where 0≤x≤1, LiₓWO₂ where 0≤x≤1, SnₓMe₁₋ₓMe'yO_{z} where Me: Mn, Fe, Pb, or Ge; Me': Al, B, P, Si, Group I, II and III elements, or halogens; 0<x≤1; 1≤y≤3; and 1≤z≤8; lithium metals; lithium alloys; silicon-based alloys; tin-based alloys; metal oxides such as SnO, SnO₂, PbO, PbO₂, Pub₂O3, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The separator is disposed between the cathode and the anode and, as the separator, a thin insulating film with high ion permeability and high mechanical strength is used. The separator generally has a pore diameter of 0.01 to 10 µm and a thickness of 5 to 300 µm. As the separator, for example, sheets or non-woven fabrics, made of an olefin polymer such as polypropylene; or glass fibers or polyethylene, which have chemical resistance and hydrophobicity, are used. When a solid electrolyte such as a polymer or the like is used as an electrolyte, the solid electrolyte may also serve as a separator.

The lithium salt-containing non-aqueous electrolyte consists of a polar organic electrolyte and a lithium salt. The electrolyte may be a non-aqueous liquid electrolyte, an organic solid electrolyte, an inorganic solid electrolyte, or the like.

Examples of the non-aqueous liquid electrolyte include non-protic organic solvents such as N-methyl-2-pyrollidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include, without being limited to, nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the non-aqueous electrolyte and examples thereof include, without being limited to, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imides.

In addition, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may further include carbon dioxide gas.

The present invention also provides a battery cell manufactured according to the above method.

In addition, the present invention provides a battery pack including at least one prismatic battery cell and a device using the battery pack as a power supply. The device may be, concretely, laptop computers, cellular phones, PDPs, PMPs, MP3 players, digital still cameras (DSCs), DVRs, smart phones, GPS systems, camcorders, electric vehicles, hybrid electric vehicles, and plug-in hybrid electric vehicles, power storage devices, and the like.

The structures and manufacturing methods of battery packs and devices are known publicly in the art. Therefore, detailed descriptions of the structures and manufacturing methods are omitted.

### [EFFECT OF THE INVENTION]

As is apparent from the above description, by using a method of manufacturing the prismatic battery cell according to the present invention, a battery case is constituted such that an upper and bottom portion sealing member corresponding to the shape of each of an upper portion and bottom portion of a prismatic body, which has an upper and bottom portion which are open by bending and then welding a metal plate of a predetermined thickness, are combined each other. Consequently, a manufacturing method of the prismatic battery cell is simplified and production process efficiency is improved and, accordingly, manufacturing costs are reduced and a prismatic battery cell which was not manufactured using a deep drawing method may be manufactured.

### [BRIEF DESCRIPTION OF THE DRAWINGS]

The above and other objects, features and other advantages of the present invention will be more clearly understood from the following detailed description taken in conjunction with the accompanying drawing, in which:
FIG. 1 is a schematic view illustrating a portion of a process of manufacturing a prismatic battery case using a deep drawing process;
FIG. 2 is an exploded perspective view of a prismatic battery cell according to one example of the present invention;
FIG. 3 is a schematic view illustrating a method of manufacturing a prismatic body according to a comparative example; and
FIG. 4 is a schematic view illustrating a method of manufacturing a prismatic body according to another example of the present invention.

### [BEST MODE]

Now, the present invention will be described in more detail with reference to the following examples. These examples are provided only for illustration of the present invention and should not be construed as limiting the scope and spirit of the present invention.

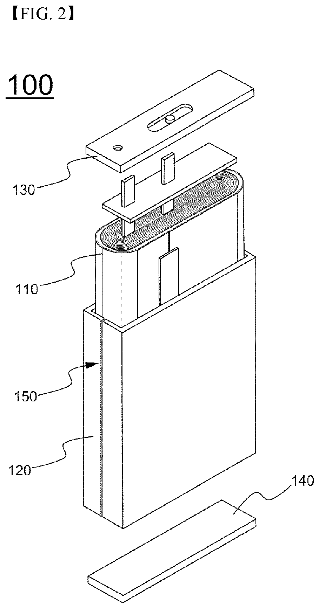

FIG. 2 illustrates an exploded perspective view of a prismatic battery cell according to one example of the present invention.

Referring to FIG. 2, the prismatic battery cell 100 according to the present invention includes an electrode assembly 110 including a separator interposed between a cathode and an anode embedded in a prismatic battery case.

A prismatic body 120 having an upper portion and bottom portion which are opened by bending and then welding a metal plate having a predetermined thickness, an upper portion sealing member 130 and bottom portion sealing member 140 corresponding to the shape of each of the upper portion and bottom portion of the prismatic body 120 are respectively manufactured. After inserting the electrode assembly 110 into the battery case, the upper portion sealing member 130 and the bottom portion sealing member 140 contact with the prismatic body 120 and then are welded, resulting in completion of fabrication of a prismatic battery cell 100.

The prismatic battery cell 100 having such a structure includes a welding side 150 in which end portions of a metal plate at one side of the prismatic battery cell 100 are welded since the prismatic body 120 constituting the prismatic battery cell 100 is manufactured by bending and then welding a metal plate.

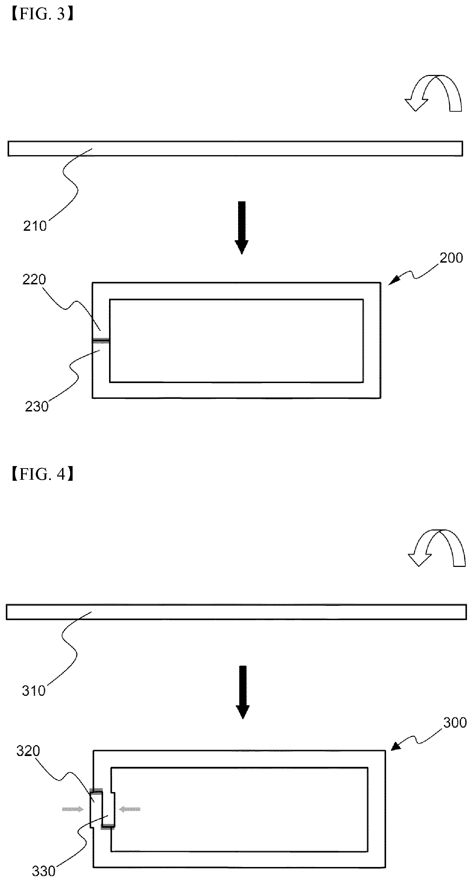

FIG. 3 is a schematic view illustrating a method of manufacturing the prismatic body according to a comparative example.

FIG. 4 is a schematic view illustrating a method of manufacturing the prismatic body according to the present invention.

First, a metal plate 210 which is made of aluminum alloy and has a thickness of, approximately, 0.3 mm, is bent in the shape of the battery case as illustrated in FIG. 3. The bent metal plate 210 contacts with overlapped both end portions 220 and 230 and, at this time, is combined with the both end portions 220 and 230 by laser welding, resulting in a prismatic body 200 having an upper portion and bottom portion which are open.

Alternatively, as illustrated in FIG. 4, both end portions 320 and 330 facing a bent metal plate 310 may be combined by laser welding such that the end portions 320 and 330 are overlapped by, approximately, 0.4 mm, resulting in a prismatic body 300 having an upper portion and bottom portion which are open. Concretely, the end portions 320 and 330 of the metal plate 310 are rolled and welded such that the thickness of the end portions 320 and 330 is 110 to 150% based on the thickness of the metal plate 310.

As illustrated in FIGS. 2 and 4, the battery cell according to the present invention is manufactured by combining each case member which is segmented and thereby manufacturing costs may be reduced, total manufacturing periods of the battery cell may be greatly shortened, the battery cell may be manufactured in a variety of designs and, at the same time, error rates of products may be reduced.

Those skilled in the art will appreciate that various modifications, additions and substitutions are possible, without departing from the scope and spirit of the invention as disclosed in the accompanying claims.

## Claims

1. A method of manufacturing a battery cell (100), which is sealed inside a prismatic battery case, comprising an electrode assembly (110) comprising a cathode, an anode and a separator interposed between the cathode and the anode, the method comprising:
bending and then welding a metal plate (310) having a predetermined thickness to manufacture a prismatic body (300) having an open upper portion and bottom portion;
manufacturing upper and bottom portion sealing members (130, 140) corresponding to shape of each of an upper portion and bottom portion of a prismatic body (300);
contacting and then welding the bottom portion sealing member (140) with the bottom portion of the prismatic body (300);
inserting the electrode assembly (110) into the battery case having a sealed bottom portion manufactured according to the contacting and then welding; and
contacting and then welding the upper portion sealing member (130) with the upper portion of the battery case manufactured according to the inserting,
**characterized in that**
overlapped both end portions (320, 330) of the metal plate (310) bent according to the bending are welded in a state that the overlapped both end portions (320, 330) are overlapped to a predetermined width.

2. The method according to claim 1, wherein the electrode assembly (110) is a folding type electrode assembly (110), a stack type electrode assembly (110), or a stack/folding type electrode assembly (110).

3. The method according to claim 1, wherein the both end portions (320, 330) are overlapped in a range of a width of 0.1 to 10 mm.

4. The method according to claim 1, wherein a thickness of an overlapped area of the both end portions (320, 330) is 110% to 150% based on a thickness of a metal plate (310).

5. The method according to claim 1, wherein the welding is performed by a laser welding method.

6. The method according to claim 1, wherein the upper portion sealing member (130) comprises an electrolyte injection port for electrolyte injection.

7. The method according to claim 1, wherein each of the metal plate (310) and the sealing members is made of aluminum or aluminum alloy.

8. The method according to claim 1, wherein the metal plate (310) and sealing members have a thickness of 0.1 to 1 mm.

9. The method according to claim 1, wherein the upper portion sealing member (130) and bottom portion sealing member (140) are manufactured by a forging process, blanking process or cutting process.

10. The method according to claim 1, wherein at least a portion of outer sides of the prismatic battery case is coated with an insulative material.

11. The method according to claim 10, wherein the coating is performed by anodization of aluminum oxide.

12. The method according to claim 10, wherein the coating is performed by spraying an insulative material.

13. The method according to claim 10, wherein the coating is performed by spreading an insulative thin film label.

## Patentansprüche

1. Verfahren zum Herstellen einer Batteriezelle (100), welche innerhalb eines prismatischen Batteriegehäuses abgedichtet ist, umfassend eine Elektrodenanordnung (110), umfassend eine Katode, eine Anode und einen Separator, welcher zwischen der Katode und der Anode angeordnet ist, wobei das Verfahren umfasst:
Biegen und dann Verschweißen einer Metallplatte (310) mit einer vorbestimmten Dicke, um einen prismatischen Körper (300) mit einem offenen oberen Abschnitt und unteren Abschnitt herzustellen;
Herstellen von Dichtungselementen für den oberen und unteren Abschnitt (130, 140), welche der Form von jedem aus einem oberen Abschnitt und einem unteren Abschnitt eines prismatischen Körpers (300) entsprechen;
Kontaktieren und dann Verschweißen des Dichtungselements für den unteren Abschnitt (140) mit dem unteren Abschnitt des prismatischen Körpers (300);
Einsetzen der Elektrodenanordnung (110) in das Batteriegehäuse mit einem abgedichteten unteren Abschnitt, welcher gemäß dem Kontaktieren und dann Verschweißen hergestellt ist; und
Kontaktieren und dann Verschweißen des Dichtungselements für den oberen Abschnitt (130) mit dem oberen Abschnitt des Batteriegehäuses, welcher gemäß dem Einsetzen hergestellt ist,
**dadurch gekennzeichnet, dass**
überlappende beide Endabschnitte (320, 330) der Metallplatte (310), welche gemäß dem Biegen gebogen sind, in einem Zustand verschweißt sind, in welchem die überlappenden beiden Endabschnitte (320, 330) bis zu einer vorbestimmten Breite überlappend sind.

2. Verfahren nach Anspruch 1, wobei die Elektrodenanordnung (110) eine Elektrodenanordnung vom Falttyp (110), eine Elektrodenanordnung vom Stapeltyp (110) oder eine Elektrodenanordnung vom Stapel-/Falttyp (110) ist.

3. Verfahren nach Anspruch 1, wobei die beiden Endabschnitte (320, 330) in einem Bereich einer Breite von 0,1 bis 10 mm überlappend sind.

4. Verfahren nach Anspruch 1, wobei eine Dicke eines überlappenden Bereichs der beiden Endabschnitte (320, 330) basierend auf einer Dicke einer Metallplatte (310) 110% bis 150% beträgt.

5. Verfahren nach Anspruch 1, wobei das Verschweißen durch ein Laserschweißverfahren durchgeführt wird.

6. Verfahren Anspruch 1, wobei das Dichtungselement für den oberen Abschnitt (130) eine Elektrolyt-Injektionsöffnung für eine Elektrolyt-Injektion umfasst.

7. Verfahren nach Anspruch 1, wobei jedes aus der Metallplatte (310) und den Dichtungselementen aus Aluminium oder einer Aluminiumlegierung hergestellt ist.

8. Verfahren nach Anspruch 1, wobei die Metallplatte (310) und die Dichtungselemente eine Dicke von 0,1 bis 1 mm aufweisen.

9. Verfahren nach Anspruch 1, wobei das Dichtungselement für den oberen Abschnitt (130) und das Dichtungselement für den unteren Abschnitt (140) durch ein Schmiedeverfahren, ein Stanzverfahren oder ein Schneidverfahren hergestellt sind.

10. Verfahren nach Anspruch 1, wobei wenigstens ein Abschnitt von äußeren Seiten des prismatischen Batteriegehäuses mit einem isolierenden Material beschichtet wird.

11. Verfahren nach Anspruch 10, wobei das Beschichten durch Anodisieren von Aluminiumoxid durchgeführt wird.

12. Verfahren nach Anspruch 10, wobei das Beschichten durch Aufsprühen eines isolierenden Materials durchgeführt wird.

13. Verfahren nach Anspruch 10, wobei das Beschichten durch Verteilen eines isolierenden Dünnfilmauftrags durchgeführt wird.

## Revendications

1. Procédé de fabrication d'un élément de batterie (100), qui est scellé à l'intérieur d'un boîtier de batterie prismatique, comprenant un ensemble d'électrodes (110) comprenant une cathode, une anode et un séparateur intercalé entre la cathode et l'anode, le procédé comprenant :
le cintrage puis le soudage d'une plaque en métal (310) ayant une épaisseur prédéterminée pour fabriquer un corps prismatique (300) ayant une portion supérieure et une portion inférieure ouvertes ;
la fabrication d'organes de scellement de portions supérieure et inférieure (130, 140) correspondant à la forme de chacune d'une portion supérieure et d'une portion inférieure d'un corps prismatique (300) ;
la mise en contact puis le soudage de l'organe de scellement de portion inférieure (140) avec la portion inférieure du corps prismatique (300) ;
l'insertion de l'ensemble d'électrodes (110) dans le boîtier de batterie ayant une portion inférieure scellée fabriquée selon la mise en contact puis le soudage ; et
la mise en contact puis le soudage de l'organe de scellement de la portion supérieure (130) avec la portion supérieure du boîtier de batterie fabriqué selon l'insertion, **caractérisé en ce que**
les deux portions d'extrémité chevauchées (320, 330) de la plaque en métal (310) cintrée selon le cintrage sont soudées dans un état où les deux portions d'extrémité chevauchées (320, 330) sont chevauchées sur une largeur prédéterminée.

2. Procédé selon la revendication 1, dans lequel l'ensemble d'électrodes (110) est un ensemble d'électrodes de type à replis (110), un ensemble d'électrodes de type à empilement (110), ou un ensemble d'électrodes de type à empilement/replis (110).

3. Procédé selon la revendication 1, dans lequel les deux portions d'extrémité (320, 330) sont chevauchées dans une plage d'une largeur de 0,1 à 10 mm.

4. Procédé selon la revendication 1, dans lequel une épaisseur d'une zone chevauchée des deux portions d'extrémité (320, 330) est de 110 % à 150 % par rapport à une épaisseur d'une plaque en métal (310).

5. Procédé selon la revendication 1, dans lequel le soudage est réalisé par un procédé de soudage au laser.

6. Procédé selon la revendication 1, dans lequel l'organe de scellement de la portion supérieure (130) comprend un orifice d'injection d'électrolyte pour une injection d'électrolyte.

7. Procédé selon la revendication 1, dans lequel chacun de la plaque en métal (310) et des organes de scellement est fait d'aluminium ou d'un alliage d'aluminium.

8. Procédé selon la revendication 1, dans lequel la plaque en métal (310) et les organes de scellement ont une épaisseur de 0,1 à 1 mm.

9. Procédé selon la revendication 1, dans lequel l'organe de scellement de la portion supérieure (130) et l'organe de scellement de la portion inférieure (140) sont fabriqués par un processus de forgeage, un processus de découpage à la presse ou un processus de découpe.

10. Procédé selon la revendication 1, dans lequel au moins une portion de bords extérieurs du boîtier de batterie prismatique est revêtue d'un matériau isolant.

11. Procédé selon la revendication 10, dans lequel le revêtement est réalisé par anodisation d'oxyde d'aluminium.

12. Procédé selon la revendication 10, dans lequel le revêtement est réalisé par pulvérisation d'un matériau isolant.

13. Procédé selon la revendication 10, dans lequel le revêtement est réalisé par étalement d'une étiquette en film mince isolant.
